# FASCICULE DE BREVET EUROPEEN

(11) **EP 0 950 350 B1**
(45) Date de publication et mention de la délivrance du brevet: **25.09.2002**
(21) Numéro de dépôt: 99450008.0
(22) Date de dépôt: 15.04.1999
(51) Int. Cl.: A01G 3/08, A01G 17/02

(54) **Tête dépamprage ou d'ébourgeonnage, et machine équipée de ladite tête**
Schneidevorrichtung oder Ausästungsvorrichtung und Traktor mit dieser Vorrichtung
Device for pruning or disbudding and machine equipped with this device

(30) Priorité: 15.04.1998 FR 9804896
(43) Date de publication de la demande: 20.10.1999
(73) Titulaire: Industrie et Nature de Navarre (I2N), Société Anonyme, 64170 Artix (FR)
(72) Inventeur: Tordable, Louis, Larceveau, 64120 Larceveau (FR)
(74) Mandataire: Thébault, Jean-Louis

(56) Documents cités:
- EP-A- 0 812 533
- FR-A- 2 580 460
- US-A- 3 473 311
- US-A- 4 974 405

## Description

La présente invention a pour objet une tête d'épamprage ou d'ébourgeonnage, et une machine équipée de ladite tête, utilisées notamment pour l'épamprage des vignes, ou l'ébourgeonnage de toute plante palissée.

L'épamprage des vignes consiste à enlever de façon manuelle, mécanique, ou chimique les bourgeons ou/et les jeunes rameaux inutiles, appelés par la suite rejets, qui se développent sur le cep, sur le vieux bois en dehors des coursons, et qui, s'ils ne sont pas enlevés, absorbent de l'énergie aux dépends des parties productives.

L'épamprage manuel est une opération lente et astreignante du fait que ces rejets se développent sur la partie inférieure du cep, proche du sol.

Aussi, une première solution consiste à effectuer l'épamprage chimiquement à l'aide de produits qui sont pulvérisés sur les rejets afin de les brûler. Même si cette solution donne des résultats convenables, l'épamprage chimique ne peut être réalisé que sous certaines conditions climatiques, sans vent et sans pluie. Par ailleurs, le fait qu'il soit chimique le rend totalement incompatible avec les critères de qualité et de respect de l'environnement recherchés par les viticulteurs.

Une autre solution consiste à réaliser l'épamprage de façon mécanique afin de rendre la tâche moins pénible et moins longue, tout en respectant les critères de qualité, et l'environnement.

Pour ce faire, il existe principalement deux types de machines.

Le premier type de machine comprend deux rouleaux disposés de part et d'autre du rang de vigne, d'axes verticaux, munis sur leur périphérie de lanières. Grâce à la rotation des rouleaux, les lanières brossent le bas du pied du cep, et coupent les rejets.

Le second type de machine, décrit dans la demande de brevet FR 2.580.460, comprend un rotor, d'axe horizontal, muni sur sa périphérie de séries de lanières radiales flexibles qui brossent le pied, grâce à la rotation du rotor, et coupent ainsi les rejets.

Toutefois, ces dispositifs mécaniques ne donnent pas entièrement satisfaction quant à la qualité de l'ébourgeonnage.

Ainsi, certains rejets qui ne sont pas coupés nettement, peuvent continuer à se développer, et nuire à la productivité du plant.

De plus, dans le second cas, la partie proche du sol ne peut être atteinte par les lanières, si bien que les rejets situés à ce niveau, les plus vivaces continuent à se développer.

Aussi, la présente invention vise à pallier les inconvénients des dispositifs de l'art antérieur, en proposant une tête d'épamprage ou d'ébourgeonnage, fiable, de conception simple, qui permet d'obtenir un épamprage de meilleure qualité, tout en respectant l'environnement.

L'invention propose également une machine équipée de ladite tête, qui peut s'adapter aisément à tout engin motorisé, tel que tracteur ou enjambeur, et qui facilite le pilotage des têtes afin d'obtenir un épamprage optimal.

A cet effet l'invention a pour objet une tête d'épamprage ou d'ébourgeonnage de végétation palissée, selon la revendication 1.

Selon une première caractéristique, la tête comprend des moyens de réglage de l'intensité de l'effort de fouettage des lanières sur la végétation.

Selon une autre caractéristique, la tête comprend des moyens d'écartement automatiques qui permettent de maintenir la surface sensiblement toujours à la même distance de la végétation et de réguler l'intensité de l'effort de fouettage des lanières sur la végétation.

Selon un mode de réalisation préféré, la tête comprend un plateau, sensiblement vertical, comprenant une face sensiblement plane orientée vers la végétation, ledit plateau, monté de façon démontable sur un arbre d'un moteur ou motoréducteur, ayant un axe de rotation sensiblement perpendiculaire à ladite surface, et étant susceptible de se translater de façon sensiblement parallèle à la végétation palissée.

De préférence, les lanières sont orientées de façon sensiblement parallèle à l'axe de rotation du plateau, au repos.

Avantageusement, le plateau comprend une premier plateau fixe, solidaire de l'arbre du moteur ou motoréducteur, et un plateau amovible, fixé de façon démontable sur le plateau fixe, qui comprend une pluralité de trous axiaux permettant le passage des lanières, les lanières étant fixées au plateau par pincement d'au moins une partie de chaque lanière entre le plateau fixe et le plateau amovible.

De façon préférentielle, les moyens d'écartement automatique comprennent un parallélogramme déformable disposé entre un support de tête et le plateau, et un amortisseur qui est susceptible d'amortir les déformations du parallélogramme, et qui tend à plaquer la tête contre la végétation.

Selon une autre caractéristique, l'amortisseur comprend des moyens de réglage de sa raideur qui permettent de régler l'intensité de l'effort de fouettage des lanières sur la végétation.

L'invention a également pour objet, une machine à épamprer ou à ébourgeonner comprenant un bâti, au moins une tête selon l'invention, des moyens de fixation à un engin motorisé tel qu'un tracteur, enjambeur ou analogue, et des moyens de réglage de la hauteur et de l'écartement de ladite tête par rapport audit bâti.

De préférence, la machine comprend en outre une potence constituée d'un montant et d'une traverse orientée sensiblement perpendiculaire au sens de déplacement de la machine, et deux bras verticaux rapportés sur ladite traverse, et à l'extrémité libre inférieure desquels sont fixées des têtes d'épamprage ou d'ébourgeonnage disposées en vis-à-vis de part et d'autre de la végétation palissée.

Avantageusement, le montant et les bras sont télescopiques, et permettent respectivement le réglage en hauteur simultané des deux têtes, et le réglage en hauteur séparé de chaque tête.

Selon une autre caractéristique, la machine comprend un support de bras monté de façon coulissante sur la traverse horizontale, chaque bras étant fixé sur un axe solidaire dudit support de façon à ce que chaque bras puisse pivoter dans un plan sensiblement perpendiculaire au sens de déplacement de la machine, un actionneur étant également prévu afin d'écarter les deux bras.

De façon préférentielle, les deux têtes disposées en vis-à-vis ont des mouvements de rotation contrarotatifs.

D'autres caractéristiques et avantages ressortiront de la description qui va suivre, donnée à titre d'exemple uniquement, et en regard des dessins annexés sur lesquels les différentes figures représentent:
- figure 1, une vue en élévation de côté montrant deux têtes d'épamprage selon l'invention,
- figure 2, une vue en élévation de dessus montrant les mêmes têtes que la figure 1,
- figure 3a, une vue en élévation de face montrant un premier mode d'implantation des lanières sur la tête d'épamprage,
- figure 3b, une vue en élévation de face montrant un second mode d'implantation des lanières sur la tête d'épamprage, et
- figure 4, une vue en élévation d'une machine équipée de la tête d'épamprage de l'invention.

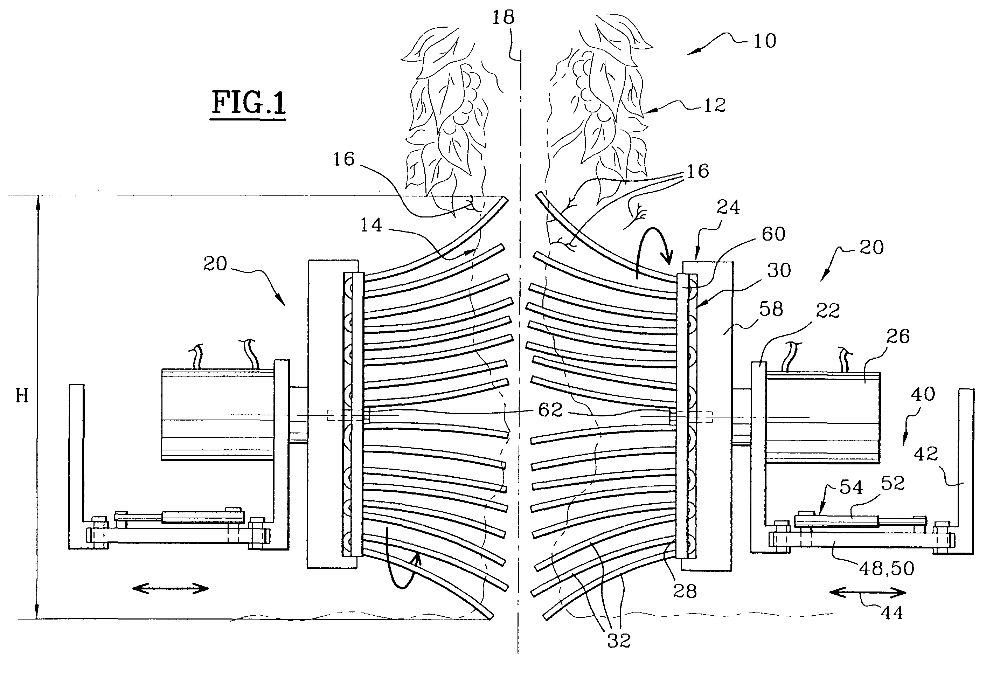

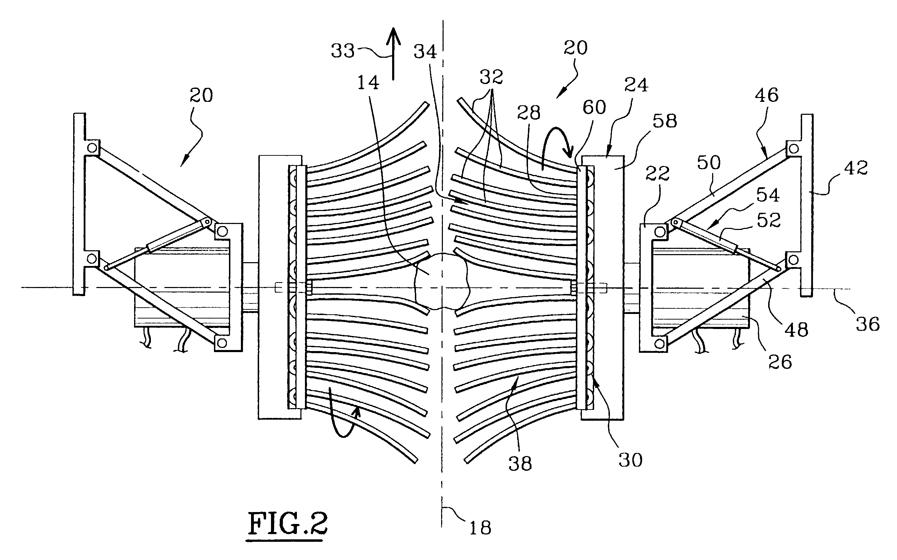

Sur la figure 1, on a représenté en 10 un cep de vigne, avec une partie supérieure 12 productive, et une partie inférieure 14 appelée tronc où se développent des rejets 16 à éliminer. Ces ceps de vigne 10 sont souvent disposés en rang matérialisé par le plan 18, visible également sur la figure 2. Une tête 20 d'épamprage ou d'ébourgeonnage est disposée sur le côté du rang. De préférence, deux têtes sont disposées en vis à vis, de part et d'autre du rang de vigne comme illustré sur les figures 1 et 2.

Chaque tête 20 comprend un support de plateau 22 sur lequel est monté de façon pivotante un plateau 24 d'axe de rotation horizontal et perpendiculaire au plan 18 matérialisant le rang de vigne. Afin d'assurer la rotation du plateau 24, chaque tête comprend un moteur ou motoréducteur 26 sur l'arbre duquel est fixé de façon solidaire mais démontable le plateau 24.

Le plateau 24 comprend une surface 28 dirigée vers le cep 10, de forme sensiblement plane, et parallèle au plan 18, sur laquelle sont rapportées grâce à des moyens 30 de fixation une pluralité de lanières 32, de flexibilité déterminée, orientées au repos de façon sensiblement axiale, vers le cep de vigne.

Lorsque le plateau 24 est mis en rotation, la force centrifuge déforme les lanières 32 qui ont tendance à s'incurver et à s'ouvrir sous forme de corolle comme illustré sur les figures 1 et 2. Cette déformation est due à la vitesse de rotation du plateau, ainsi qu'à la flexibilité des lanières.

Aussi, en augmentant la vitesse et/ou en augmentant la flexibilité, la déformation des lanières 32 est accentuée, ce qui tend à rendre l'extrémité des lanières sensiblement parallèle au plan 18.

De ce fait, lorsque la tête 20 est appliquée contre la végétation, les lanières fouettent les rejets, ce qui provoque la découpe desdits rejets du cep.

La découpe parfaite des rejets 16 est obtenue grâce au déplacement en translation matérialisé par la flèche 33 sur la figure 2 de la tête 20, et donc du plateau 24, dans la direction du plan 18 du rang de vigne, en maintenant la surface 28 toujours sensiblement parallèle au plan 18.

Ainsi, lorsque le rejet 16 est situé en vis à vis de la première moitié 34 du plateau délimité par le plan médian vertical 36, il est fouetté dans un sens, vers le bas par exemple. Au contraire, lorsque la tête s'est translatée et que le même rejet est situé en vis à vis de la seconde moitié 38 du plateau, il est fouetté en sens contraire, vers le haut par exemple.

Le fait de fouetter les rejets dans deux sens opposés permet d'obtenir une coupe parfaite et certaine des rejets, et un épamprage de qualité.

Par ailleurs, l'effort de fouettage peut être modulé en fonction de la grosseur des rejets, en choisissant la flexibilité des lanières 32.

Ainsi, lorsque les rejets sont peu développés et se trouvent sous forme de bourgeons, des lanières très souples peuvent être utilisées. Au contraire, lorsque les rejets seront très développés, les lanières seront moins flexible, afin d'obtenir un résultat optimal.

Dans le cas de l'épamprage de jeunes plants, des lanières souples seront utilisées.

Par ailleurs, la hauteur de la bande de travail H sur la figure 1 peut être réglée en choisissant un plateau 24 de diamètre plus ou moins important, et/ou en modifiant la longueur des lanières 32.

Afin d'améliorer la qualité de l'épamprage, la tête 20 comprend également des moyens 40 d'écartement de la tête disposés de préférence entre le support de plateau 22 et un support de tête 42. Ces moyens 40 d'écartement permettent de translater la tête 20 dans une direction 44 perpendiculaire au plan 18 du rang de vigne afin de maintenir la surface 28 de la tête sensiblement à la même distance du cep malgré les éventuelles déformations dudit cep.

Ainsi, on peut régler l'intensité de l'effort de fouettage des lanières 32 en modifiant la distance entre la surface 28 et le cep.

Ces moyens 40 d'écartement comprennent d'une part un parallélogramme 46 déformable constitué par le support de plateau 22 et le support de tête 42 qui sont reliés par deux biellettes 48, 50 sensiblement parallèles, et d'autre part un actionneur 52 qui permet de déformer le parallélogramme 46 et donc de modifier la distance entre le support de plateau 22 et le support de tête 42.

De préférence, les moyens 40 d'écartement sont automatiques.

Selon un premier mode de réalisation non représenté, la tête 20 peut être équipée d'un capteur qui pilote l'actionneur 52 en fonction de la distance mesurée entre la surface 28 du plateau et le cep.

Selon un second mode de réalisation préféré et illustré sur les figures 1 et 2, l'actionneur 52 est réalisé par un amortisseur qui est susceptible d'amortir les déformations du parallélogramme 46, et tend à plaquer la tête 20 contre la végétation. Cet amortisseur 52 peut être de type ressort, vérin pneumatique ou analogue.

Dans ce cas, lorsque le cep de vigne est déformé vers la droite comme illustré sur la figure 1, la distance séparant la surface 28 du plateau et le cep se réduit, ce qui accroît l'effort de fouettage. Par réaction, la tête 20 tend à s'éloigner du cep en déformant le parallélogramme 46. En opposition, l'amortisseur 52 comprimé maintient la tête 20 contre le cep afin que l'effort de fouettage soit sensiblement constant.

Au contraire, lorsque le cep est déformé vers la gauche, la distance séparant la surface 28 du plateau et le cep augmente, ce qui provoque un effort de fouettage moins important. Par réaction, l'amortisseur 52 se détend afin de maintenir la tête 20 contre le cep, et un effort de fouettage toujours sensiblement constant.

De ce fait, les moyens 40 d'écartement constitue également des moyens 54 de régulation de l'effort de fouettage afin de maintenir ledit effort sensiblement constant malgré les irrégularités de la végétation.

Selon cette variante, l'effort de fouettage peut être ajusté grâce à des moyens de réglage, par exemple en augmentant plus ou moins la raideur de l'amortisseur 52.

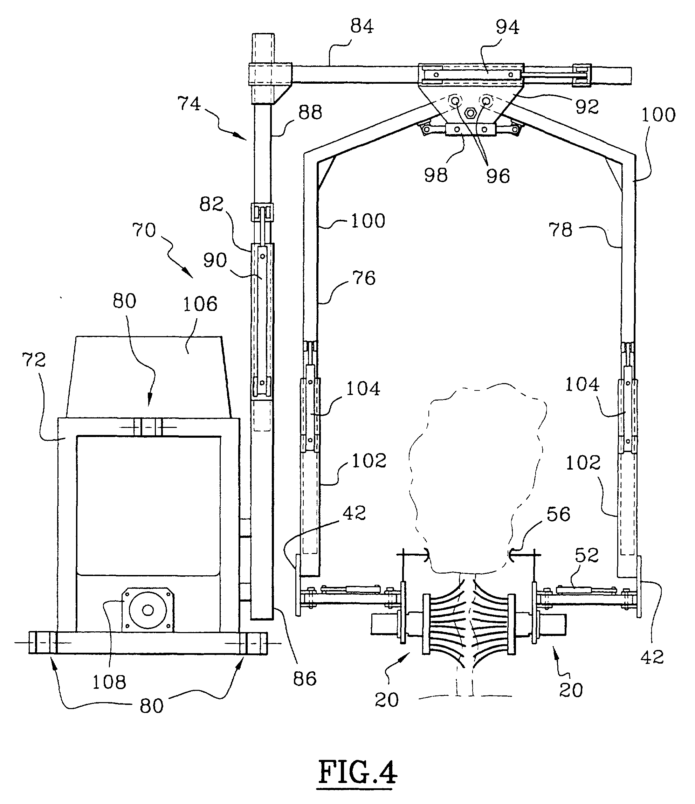

Eventuellement, comme illustré sur la figure 4, des glissières 56, qui prennent appui contre la végétation, sont rapportées sur le support de plateau 24 afin d'améliorer le positionnement de la tête 20 par rapport à la végétation.

Selon un mode de réalisation préféré des moyens 30 de fixation des lanières, le plateau 24 est réalisé en deux parties, une première partie 58 fixe, appelé plateau fixe, solidaire de l'arbre du moteur 26, et une seconde partie 60, appelée plateau amovible, qui est fixée de façon démontable sur le plateau fixe 58 grâce à une vis 62 disposée de préférence au niveau de l'axe de rotation du plateau 24.

Afin de fixer les lanières 32, le plateau amovible 60 comprend une pluralité de trous 64 axiaux, répartis de préférence sur des cercles concentriques. Ainsi, chaque lanière est introduite par un premier trou 66, puis ressort par un second trou 68, une partie de ladite lanière 32 étant disposée entre les plateaux fixe 58 et amovible 60, les extrémités de la lanière étant libres de tout mouvement et disposées de façon sensiblement axiale vers l'extérieur du plateau 24.

Le serrage de la vis 62 permet de pincer les lanières entre le plateau fixe 58 et amovible 60 et assure une fixation solide des lanières 32.

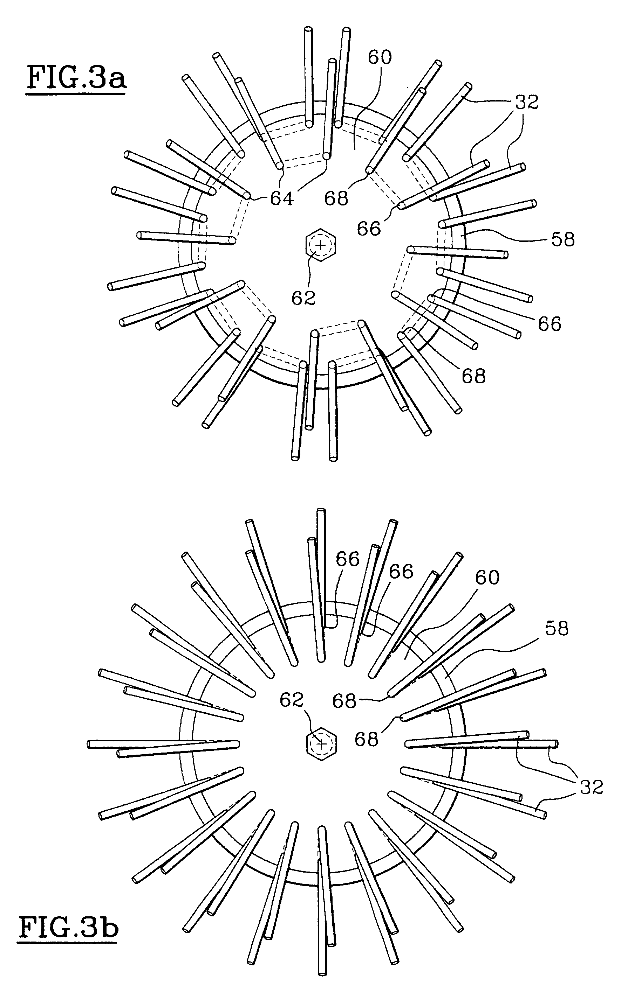

Sur les figures 3A et 3B, on a représenté plusieurs mode d'implantation des lanières. Selon un premier mode, illustré sur la figure 3A, les deux trous de passage d'une même lanière sont disposés sur un même cercle.

Selon un second mode, illustré sur la figure 3B, les deux trous de passage d'une même lanière sont disposés sur des cercles différents.

De préférence, la partie débouchante des trous 64 comprend un chanfrein afin de limiter les risques de cisaillement des lanières au niveau des trous.

Sur la figure 4, on a représenté une machine 70, appelée épampreuse, équipée de deux têtes 20 d'épamprage ou d'ébourgeonnage selon l'invention.

Cette épampreuse comprend un bâti 72 sur lequel est fixé une potence 74, deux bras verticaux 76, 78 rapportés sur la partie horizontale de la potence 74, et deux têtes 20 disposées en vis-à-vis à l'extrémité libre de chaque bras 76, 78.

Le bâti 72 comprend également des moyens 80 de fixation à un engin motorisé tel qu'un tracteur , enjambeur ou analogue. Dans le cas illustré sur la figure 4, les moyens 80 de fixation sont de type trois points et permettent la fixation de l'épampreuse sur un relevage à l'avant ou à l'arrière d'un tracteur.

La potence 74 comprend un montant vertical 82 dont l'extrémité inférieure est solidaire du bâti 72, et une traverse 84 horizontale dont une extrémité est fixée à l'extrémité supérieure du montant 82, et qui est orientée sensiblement perpendiculaire au sens de déplacement de la machine.

Afin de régler simultanément la hauteur des deux têtes 20, le montant 82 est télescopique, et comprend une partie inférieure 86 et une partie supérieure 88 qui coulissent l'une dans l'autre grâce à un actionneur 90.

Afin de régler la distance séparant le bâti des deux têtes 20, un support de bras 92 est monté de façon coulissante sur la traverse horizontale 84. De préférence, la translation du support de bras 92 est obtenue par un actionneur 94.

L'extrémité supérieure de chaque bras 76, 78 est fixé sur un axe 96 solidaire du support de bras 92 de façon à ce que chaque bras puisse pivoter dans un plan sensiblement perpendiculaire au sens de déplacement de la machine. Un actionneur 98 est également prévu afin d'écarter les deux bras 76, 78.

Afin de pouvoir régler séparément la hauteur de chaque tête 20, chaque bras est télescopique, et comprend une partie supérieure 100 et une partie inférieure 102 qui coulissent l'une dans l'autre grâce à un actionneur 104.

Le support de tête 42 de chaque tête 20 est rapporté à l'extrémité inférieure de chaque bras afin que les deux têtes 20 soient disposées en vis à vis.

Afin d'améliorer la qualité de l'épamprage et d'équilibrer les efforts de fouettage subis par le cep, les têtes 20 en vis à vis ont des mouvements de rotation contrarotatifs.

Selon un mode de réalisation préféré, les actionneurs 90, 94, 98, 104 sont de type vérin hydraulique. Dans ce cas, la machine comprend en outre une réserve 106 de fluide hydraulique, une pompe 108 actionnée grâce à la prise de force du tracteur, ainsi que des raccords et des commandes non représentés car à la portée de l'homme du métier.

Le fonctionnement de l'épampreuse est maintenant décrit au regard des figures.

Tout d'abord, en fonction de la végétation, l'opérateur règle la hauteur de la bande de travail H en choisissant le diamètre du plateau 24 et la longueur des lanières 32. Suivant les rejets à couper, il choisit le type de lanières à utiliser, notamment en fonction de leur flexibilité, puis il règle l'effort de fouettage en ajustant le tarage de l'amortisseur 52.

En fonction du terrain et de la position moyenne du rang de vigne, il ajuste la hauteur des têtes grâce aux actionneurs 90 et 104, et l'écartement des têtes 20 par rapport au bâti 72 grâce à l'actionneur 94.

Enfin, il positionne les deux têtes 20 de chaque côté du rang en écartant les bras grâce à l'actionneur 98.

Pour l'opération d'épamprage, l'utilisateur doit simplement conduire son tracteur en maintenant un écart régulier entre le tracteur et le rang de vigne. Les têtes de l'invention s'adaptent automatiquement aux variations de la végétation comme indiqué précédemment.

Enfin, l'invention n'est évidemment pas limitée au mode de mise en oeuvre représenté et décrit ci-dessus, mais en couvre au contraire toutes les variantes, notamment en ce qui concerne l'orientation du plateau 24, et de la surface 28 qui peut être plus ou moins inclinée en fonction de la végétation.

## Revendications

1. Tête d'épamprage ou d'ébourgeonnage de végétation palissée, comprenant une surface (28) sur laquelle sont rapportées une pluralité de lanières (32) flexibles, **caractérisée en ce que** la surface (28) est mise en rotation suivant un axe sensiblement perpendiculaire à ladite surface (28), lesdites lanières étant susceptibles de fouetter la végétation dans deux sens lorsque ladite surface (28) se translate de façon sensiblement parallèle à la végétation.

2. Tête d'épamprage ou d'ébourgeonnage selon la revendication 1, **caractérisée en ce qu'**elle comprend des moyens de réglage de l'intensité de l'effort de fouettage des lanières (32) sur la végétation.

3. Tête d'épamprage ou d'ébourgeonnage selon la revendication 1 ou 2, **caractérisée en ce qu'**elle comprend des moyens (40) d'écartement automatiques qui permettent de maintenir la surface (28) sensiblement toujours à la même distance de la végétation et de réguler l'intensité de l'effort de fouettage des lanières (32) sur la végétation.

4. Tête d'épamprage et d'ébourgeonnage selon l'une quelconque des revendications précédentes, **caractérisée en ce qu'**elle comprend un plateau (24), sensiblement vertical, comprenant une face sensiblement plane orientée vers la végétation qui constitue la surface (28), ledit plateau, monté de façon démontable sur un arbre d'un moteur ou motoréducteur (26), ayant un axe de rotation sensiblement perpendiculaire à ladite surface (28), et étant susceptible de se translater de façon sensiblement parallèle à la végétation palissée.

5. Tête d'épamprage et d'ébourgeonnage selon la revendication 4, **caractérisée en ce que** les lanières (32) sont orientées de façon sensiblement parallèle à l'axe de rotation du plateau (24) au repos.

6. Tête d'épamprage et d'ébourgeonnage selon l'une des revendications 4 ou 5, **caractérisée en ce que** le plateau (24) comprend une premier plateau (58) fixe, solidaire de l'arbre du moteur ou motoréducteur (26), et un plateau amovible (60), fixé de façon démontable sur le plateau fixe (58), qui comprend une pluralité de trous (66) axiaux permettant le passage des lanières (32), et **en ce que** les lanières (32) sont fixées au plateau (24) par pincement d'au moins une partie de chaque lanière (32) entre le plateau fixe (58) et le plateau amovible (60).

7. Tête d'épamprage et d'ébourgeonnage selon l'une quelconque des revendications 4 à 6, **caractérisée en ce que** les moyens (40) d'écartement automatique comprennent un parallélogramme déformable (46) disposé entre un support de tête (42) et le plateau (24), et un amortisseur (52) qui est susceptible d'amortir les déformations du parallélogramme, et qui tend à plaquer la tête contre la végétation.

8. Tête d'épamprage et d'ébourgeonnage selon la revendication 7, **caractérisée en ce que** l'amortisseur (52) comprend des moyens de réglage de sa raideur qui permettent de régler l'intensité de l'effort de fouettage des lanières (32) sur la végétation.

9. Machine à épamprer ou à ébourgeonner comprenant un bâti (72), au moins une tête selon l'une quelconque des revendications précédentes, des moyens (80) de fixation à un engin motorisé tel qu'un tracteur, enjambeur ou analogue, et des moyens (90, 94, 104) de réglage de la hauteur et de l'écartement de la ou des têtes par rapport audit bâti (72).

10. Machine selon la revendication 9, **caractérisée en ce qu'**elle comprend en outre une potence (74) constituée d'un montant (82) et d'une traverse (84) orientée sensiblement perpendiculaire au sens de déplacement de la machine, et deux bras (76, 78) verticaux rapportés sur ladite traverse (84), et à l'extrémité libre inférieure desquels sont fixées des têtes d'épamprage ou d'ébourgeonnage disposées de part et d'autre de la végétation palissée en vis-à-vis.

11. Machine selon la revendication 10, **caractérisée en ce que** le montant (82) est télescopique, et permet le réglage en hauteur simultané des deux têtes, et **en ce que** les bras (76, 78) sont télescopiques, et permettent le réglage en hauteur séparé de chaque tête.

12. Machine selon la revendication 10 ou 11, **caractérisée en ce qu'**elle comprend un support de bras (92) monté de façon coulissante sur la traverse horizontale, chaque bras (76, 78) étant fixé sur un axe (96) solidaire dudit support de façon à ce que chaque bras puisse pivoter dans un plan sensiblement perpendiculaire au sens de déplacement de la machine, un actionneur (98) étant également prévu afin d'écarter les deux bras.

13. Machine selon l'une quelconque des revendications 10 à 12, **caractérisée en ce que** les deux têtes disposées en vis-à-vis ont des mouvements de rotation contrarotatifs.

## Claims

1. A head for thinning out or disbudding trained vegetation, comprising a surface (28) to which there are attached a plurality of flexible straps (32), **characterised in that** the surface (28) is rotated on an axis substantially perpendicular to said surface (28), said straps being able to whip the vegetation in two directions when said surface (28) moves in translation substantially parallel to the vegetation.

2. A thinning-out or disbudding head according to claim 1, **characterised in that** it comprises means of adjusting the intensity of the whipping force of the straps (32) on the vegetation.

3. A thinning-out or disbudding head according to claim 1 or 2, **characterised in that** it comprises automatic separation means (40) which make it possible to keep the surface (28) substantially always at the same distance from the vegetation and to regulate the intensity of the whipping force of the straps (32) on the vegetation.

4. A thinning-out and disbudding head according to any one of the preceding claims, **characterised in that** it comprises a substantially vertical plate (24) comprising a substantially flat face oriented towards the vegetation which constitutes the surface (28), the said plate, removably mounted on a shaft of a motor or geared motor (26), having a rotation axis substantially perpendicular to said surface (28), and being able to move in translation substantially parallel to the trained vegetation.

5. A thinning-out and disbudding head according to claim 4, **characterised in that** the straps (32) are oriented substantially parallel to the rotation axis of the plate (24) at rest.

6. A thinning-out and disbudding head according to one of claims 4 or 5, **characterised in that** the plate (24) comprises a first fixed plate (58), fixed to the shaft of the motor or geared motor (26), and a removable plate (60), removably fixed to the fixed plate (58), which comprises a plurality of axial holes (66) allowing the straps (32) to pass, and **in that** the straps (32) are fixed to the plate (24) by gripping at least part of each strap (32) between the fixed plate (58) and the removable plate (60).

7. A thinning-out and disbudding head according to any one of claims 4 to 6, **characterised in that** the automatic separation means (40) comprise a deformable parallelogram (46) disposed between a head support (42) and the plate (24), and a damper (52) which is able to damp the deformations of the parallelogram, and which tends to press the head against the vegetation.

8. A thinning-out and disbudding head according to claim 7, **characterised in that** the damper (52) comprises means for adjusting its stiffness which make it possible to adjust the intensity of the whipping force of the straps (32) on the vegetation.

9. A thinning-out or disbudding machine comprising a frame (72), at least one head according to any one of the preceding claims, means (80) for fixing to a motorised machine such as tractor, vineyard straddle tractor or the like, and means (90, 94, 104) for adjusting the height and separation of the head or heads with respect to said frame (72).

10. A machine according to claim 9, **characterised in that** it also comprises a bracket (74) providing an upright (82) and a cross-member (84) oriented substantially perpendicular to the direction of movement of the machine, and two vertical arms (76, 78) attached to said cross-member (84), and at the bottom free end of which there are fixed thinning-out or disbudding heads disposed on each side of the facing trained vegetation.

11. A machine according to claim 10, **characterised in that** the upright (82) is telescopic and allows the simultaneous adjustment for height of the two heads, and **in that** the arms (76, 78) are telescopic and allow the separate adjustment for height of each head.

12. A machine according to claim 10 or 11, **characterised in that** it comprises an arm support (92) slidably mounted on the horizontal cross-member, each arm (76, 78) being fixed to a spindle (96) secured to said support so that each arm can pivot in a plane substantially perpendicular to the direction of movement of the machine, an actuator (98) also being provided in order to separate the two arms.

13. A machine according to any one of claims 10 to 12, **characterised in that** the two heads disposed opposite have contrarotational rotation movements.

## Patentansprüche

1. Abrank- oder Ausschneidekopf für palisierte Vegetation, der eine Oberfläche (28) aufweist, an die mehrere flexible Riemen (32) angebracht sind, **dadurch gekennzeichnet, daß** die Oberfläche (28) um eine zu dieser Oberfläche (28) im wesentlichen senkrechte Achse gedreht wird, wobei die Riemen auf die Vegetation in zwei Richtungen schlagen können, wenn diese Oberfläche (28) sich im wesentlichen parallel zu der Vegetation verschiebt.

2. Abrank- oder Ausschneidekopf nach Anspruch 1, **dadurch gekennzeichnet, daß** er Mittel für die Einstellung der Stärke der Schlagkraft der Riemen (32) auf die Vegetation umfaßt.

3. Abrank- oder Ausschneidekopf nach Anspruch 1 oder 2, **dadurch gekennzeichnet, daß** er automatische Beabstandungsmittel (40) umfaßt, die ermöglichen. die Oberfläche (28) im wesentlichen immer im gleichen Abstand von der Vegetation zu halten und die Stärke der Schlagkraft der Riemen (32) auf die Vegetation einzustellen.

4. Abrank- und Ausschneidekopf nach einem der vorhergehenden Ansprüche. **dadurch gekennzeichnet, daß** er eine im wesentlichen vertikale Platte (24) umfaßt, die eine im wesentlichen ebene Fläche, die zur Vegetation gerichtet ist, aufweist und die Oberfläche (28) bildet, wobei die Platte, die an einer Welle eines Motors oder Getriebemotors (26) abnehmbar montiert ist, eine zu der Oberfläche (28) im wesentlichen senkrechte Drehachse besitzt und sich im wesentlichen parallel zu der palisierten Vegetation verschieben kann.

5. Abrank- und Ausschneidekopf nach Anspruch 4, **dadurch gekennzeichnet, daß** die Riemen (32) im Ruhezustand im wesentlichen parallel zur Drehachse der Platte (24) orientiert sind.

6. Abrank- und Ausschneidekopf nach einem der Ansprüche 4 oder 5, **dadurch gekennzeichnet, daß** die Platte (24) eine erste feste Platte (58), die mit der Welle des Motors oder Getriebemotors (26) fest verbunden ist, und eine abnehmbare Platte (60), die an der festen Platte (58) abnehmbar befestigt ist und mehrere axiale Löcher (66) aufweist, die den Durchgang der Riemen (32) ermöglichen. umfaßt, und daß die Riemen (32) an der Platte (24) durch Quetschen wenigstens eines Teils jedes Riemens (32) zwischen die feste Platte (58) und die abnehmbare Platte (60) befestigt sind.

7. Abrank- und Ausschneidekopf nach einem der Ansprüche 4 bis 6, **dadurch gekennzeichnet, daß** die automatischen Beabstandungsmittel ein verformbares Parallelogramm (46), das zwischen einem Haltekopf (42) und der Platte (24) angeordnet ist, sowie eine Dämpfereinrichtung (52), die die Verformungen des Parallelogramms dämpfen kann und bestrebt ist, den Kopf gegen die Vegetation zu drücken, umfassen.

8. Abrank- und Ausschneidekopf nach Anspruch 7, **dadurch gekennzeichnet, daß** die Dämpfereinrichtung (52) Mittel für die Einstellung ihres Radius umfaßt, die ermöglichen, die Schlagkraft der Riemen (32) auf die Vegetation einzustellen.

9. Maschine zum Abranken oder Ausschneiden, die einen Rahmen (72), wenigstens einen Kopf nach einem der vorhergehenden Ansprüche, Mittel (80) für die Befestigung an einer motorisierten Maschine wie etwa an einem Traktor, an einem Weinkulturgerät auf Stelzen oder dergleichen sowie Mittel (90, 94, 104) für die Einstellung der Höhe und des Abstandes des oder der Köpfe in bezug auf den Rahmen (72) umfaßt.

10. Maschine nach Anspruch 9, **dadurch gekennzeichnet, daß** sie außerdem einen Ausleger (74), der aus einem Pfosten (82) und aus einer Querstrebe (84), die im wesentlichen senkrecht zur Verschiebungsrichtung der Maschine orientiert ist, gebildet ist, und zwei vertikale Arme (76, 78), die an der Querstrebe (84) angebracht sind, umfaßt, wobei am unteren freien Ende der beiden Arme Abrank- oder Ausschneideköpfe befestigt sind, die beiderseits der palisierten Vegetation einander gegenüber angeordnet sind.

11. Maschine nach Anspruch 10, **dadurch gekennzeichnet, daß** der Pfosten (82) teleskopartig ist und die gleichzeitige Höheneinstellung der beiden Köpfe ermöglicht und daß die Arme (76, 78) teleskopartig sind und die getrennte Höheneinstellung jedes Kopfes ermöglichen.

12. Maschine nach Anspruch 10 oder 11, **dadurch gekennzeichnet, daß** sie einen Armträger (92) umfaßt, der gleitend an der horizontalen Querstrebe montiert ist, wobei jeder Arm (76, 78) an einer mit dem Träger fest verbundenen Achse (96) in der Weise befestigt ist, daß jeder Arm in einer zur Verschiebungsrichtung der Maschine im wesentlichen senkrechten Ebene schwenken kann, wobei außerdem ein Aktuator (98) vorgesehen ist, der die beiden Arme voneinander entfernen kann.

13. Maschine nach einem der Ansprüche 10 bis 12, **dadurch gekennzeichnet, daß** die beiden einander gegenüber angeordneten Köpfe entgegengesetzte Drehbewegungen ausführen.
